# EUROPÄISCHE PATENTSCHRIFT

(11) **EP 1 284 386 B1**
(45) Veröffentlichungstag und Bekanntmachung des Hinweises auf die Patenterteilung: **30.08.2006**
(21) Anmeldenummer: 02405682.2
(22) Anmeldetag: 08.08.2002
(51) Int. Cl.: F16L 21/06

(54) **Verbindung zwischen zwei Lüftungsrohrteilen**
Connection between two ventilation pipe parts
Connexion entre deux éléments de tuyauterie de ventilation

(30) Priorität: 14.08.2001 CH 20011497
(43) Veröffentlichungstag der Anmeldung: 19.02.2003
(73) Patentinhaber: GEBERIT TECHNIK AG, 8645 Jona (CH)
(72) Erfinder: Häsler, Heinz, 8645 Jona (CH); Schuster, Alexander, 8645 Jona (CH)
(74) Vertreter: Groner, Manfred

(56) Entgegenhaltungen:
- DE-A- 3 234 277
- DE-U- 8 807 753
- FR-A- 2 582 376
- US-A- 2 232 936
- US-A- 3 269 754
- PATENT ABSTRACTS OF JAPAN vol. 1995, no. 03, 28. April 1995 (1995-04-28) & JP 06 346991 A (YASUO KAJIWARA), 20. Dezember 1994 (1994-12-20)

## Beschreibung

Die Erfindung betrifft eine Verbindung nach dem Oberbegriff des Anspruchs 1.

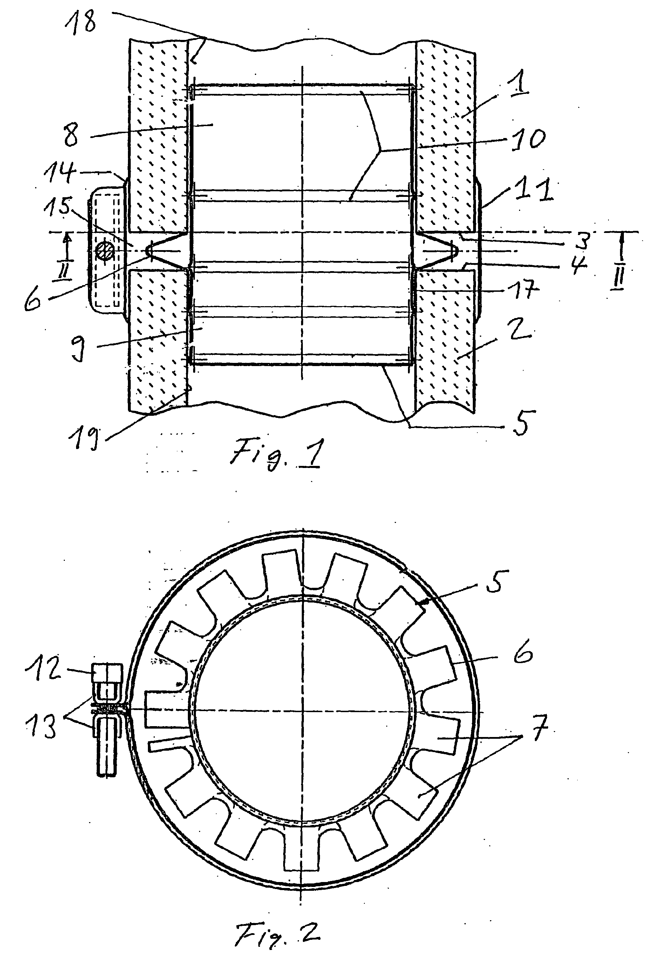

Die gattungsgemässe DE 88 07 753 U offenbart einen Kompensator zum Ausgleich der Längenänderungen von Kunststoffrohren. Nach der Ausführung gemäss den Figuren 1 und 2 ist ein Dehn-Stauch-Bereich vorgesehen, der als nach aussen ragenden und umlaufenden Wulst ausgebildet ist. Der Bereich besteht aus Gummi, Kautschuk, Polytetrafluorethylen, Polyester, aus einem ein- oder beidseitig beschichteten Textil aus Metall- oder Kunststoffdraht, aus Synthetik- oder Naturgewebe, aus Nonwoven oder aus Werkstoffkombinationen. Bei brandgeschützten Verbindungen in Lüftungsrohren eignen sich Werkstoffe aus Gummi und Kunststoffen nicht. Würde der Dehn-Stauch-Bereich aus Metall hergestellt, wäre dieser vergleichsweise starr und würde keinen wesentlichen Längenausgleich zulassen.

Die DE 32 34 277 A offenbart eine Verbindung von zwei Verbundsrohren, die einen rohrförmigen Innenverbinder aufweist, der jeweils mit einem Ende in ein Rohr eingreift. An der Aussenseite des Innenverbinders ist gemäss Figur 3 ein Gummipuffer für den Längenausgleich in Längsrichtung der beiden Verbundrohre angeordnet. Gummipuffer eignen sich für brandgeschützte Systeme nicht und können Toleranzen der Stirnflächen der verbundenen Rohre nur sehr begrenzt aufnehmen.

Lüftungsrohre aus einem mineralischen Werkstoff und insbesondere aus Vermiculit sind aus der DE 195 42 069 bekannt. Bei brandgeschützten Systemen mit solchen Rohrteilen ist es wesentlich, dass diese dicht miteinander verbunden sind. Dazu sind die in dieser Schrift offenbarten Rohrteile so ausgebildet, dass sie zusammengesteckt werden können. Zudem wird vorgeschlagen, die Rohrteile mit stumpfem Stoss aneinandergrenzen zu lassen und durch einen Kleber miteinander zu verbinden. Das Verkleben von Lüftungsrohrteilen auf der Baustelle ist jedoch aufwendig und die mechanische Festigkeit der Verbindung und insbesondere die Zugfestigkeit ist häufig nicht ausreichend. Zudem werden an die Toleranzen und insbesondere an die Qualität der Stossflächen hohe Anforderungen gestellt, die nicht immer gewährleistet werden können.

Der Erfindung liegt die Aufgabe zugrunde, eine Verbindung von mineralische Lüftungsrohrteilen zu schaffen, die einfacher montierbar und dennoch gas- und rauchdicht ist.

Die Aufgabe ist gemäss Anspruch 1 gelöst. Die erfindungsgemässe Verbindung ermöglicht eine mechanische und einfache Montage ohne Hilfsstoffe, wobei zudem grosse Toleranzen zulässig sind. Die Rohrteile können grob abgelängt werden und die Stossflächen müssen nicht genau senkrecht zur Längsrichtung verlaufen. Für die Abdichtung wird die bei solchen Rohrteilen gewährleistete glatte Innenfläche verwendet. Eine besonders kostengünstige Ausführung ergibt sich dann, wenn gemäss einer Weiterbildung der Erfindung die Mittel für einen Längenausgleich durch einen brandfesten und federelastischen Werkstoff gebildet sind, die an der Aussenseite des Innenverbinders angeordnet sind. Diese Mittel sind durch lamellenartige Federelemente gebildet, die nach aussen und zwischen die Stirnseiten der beiden Lüftungsrohrteile eingreifen.

Ein Innenverbinder mit solchen Federelementen kann sehr kostengünstig durch Stanzen eines Bleches hergestellt werden. Eine besonders hohe Zugfestigkeit und kraftschlüssige Verbindung ergibt sich dann, wenn gemäss einer Weiterbildung der Erfindung ein

Aussenverbinder vorgesehen ist, der beispielsweise als Rohrschelle ausgebildet ist.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: ein Längsschnitt durch eine erfindungsgemässe Verbindung und
- Fig. 2: ein Querschnitt entlang der Linie II-II der Fig. 1.

Die Fig. 1 zeigt die Enden zweier Lüftungsrohrteile 1 und 2, die jeweils eine Stirnseite 3 bzw. 4 aufweisen, zwischen denen ein Zwischenraum 15 besteht. Die beiden Leitungsrohre 1 und 2 bestehen aus einem mineralischen Werkstoff, der gute Brandschutz-Eigenschaften besitzt Der Werkstoff ist beispielsweise Vermiculit.

Die beiden Lüftungsrohrteile 1 und 2 werden mit einem Innenverbinder 5 zusammengehalten, der rohrförmig ausgebildet ist. Im Bereich 17 weist der Innenverbinder 5 an seinem Umfang mehrere radial nach aussen vorspringende und im Querschnitt V-förmige federelastische Lappen 6 auf. Diese greifen, wie ersichtlich, in den Zwischenraum 15 ein und liegen federelastisch gespannt an der Stirnfläche 3 des Leitungsteiles 1 an.

Der Innenverbinder weist an seinen Enden 8 und 9 jeweils wenigstens eine, vorzugsweise mehrere umlaufende Dichtrillen 10 auf, die sickenartig ausgebildet sind und jeweils an einer Innenseite 18 bzw. 19 eines Rohrteiles 1 bzw. 2 anliegen. Diese Dichtrillen 10 dichten den Innenverbinder 5 gegenüber dem Rohrteil 1 bzw. 2 gas- und rauchdicht ab. Anstelle der Rillen 10 sind aber auch andere geeignete Dichtmittel denkbar, welche die geforderte Gas- und Rauchdichtigkeit gewährleisten. Die Rillen 10 haben jedoch den Vorteil, dass sie sehr einfach herstellbar sind und keine zusätzlichen Dichtmittel erforderlich sind. Der Innenverbinder 5 kann beispielsweise aus Blech hergestellt sein. Wie ersichtlich, ist die Dichtigkeit von der Qualität der Stirnseiten 3 und 4, beispielsweise von deren Ausrichtung nicht beeinflusst. Die entsprechenden Leitungsrohrteile 1 und 2 können damit grob abgelängt werden.

Ist eine besonders zugfeste und kraftschlüssige Verbindung erforderlich, so ist ein Aussenverbinder 11 vorgesehen, der zwei nach innen gerichtete umlaufende Ränder 14 aufweist, die aussenseitig an den Lüftungsrohrteilen 1 und 2 unter Spannung angelegt sind. Der Aussenverbinder 11 ist als Rohrschelle ausgebildet und weist wenigstens eine Spannschraube 12 sowie Spannbacken 13 auf. Sowohl der Innenverbinder 5 als auch der Aussenverbinder 11 ermöglichen einen Längenausgleich, d.h. eine Verschiebung der Lüftungsrohrteile 1 und 2 in ihrer Längsrichtung, wobei der Zwischenraum 15 vergrössert oder verkleinert wird. Die Dichtigkeit und die Zugfestigkeit werden hierbei nicht beeinträchtigt.

Die Montage der Verbindung ist einfach und erfordert keine chemischen Hilfsstoffe. Bei der Montage werden die Lüftungsrohrteile 1 und 2 abgelängt, was wie erwähnt, ohne besondere Sorgfalt erfolgen kann. Anschliessend wird der Innenverbinder 5 in die Lüftungsrohrteile 1 und 2 eingeschoben, sodass zwischen den Stirnseiten 3 und 4 ein Zwischenraum 15 besteht, in welchen die Lappen 6 federnd eingreifen. Gegebenenfalls wird schliesslich der Aussenverbinder 11 angelegt und mit der Spannschraube 12 gespannt. Im Gegensatz zu einer Klebeverbindung ist jederzeit ohne Beschädigung eine Lösung der Verbindung möglich.

## Patentansprüche

1. Verbindung mit zwei Lüftungsrohrteilen (1, 2), die sich an einer Stossstelle mit stirnseitigen Flächen (3, 4) gegenüberliegen und aus einem nicht brennbaren und vorzugsweise mineralischen Werkstoff hergestellt sind, mit einem rohrförmig ausgebildeten Innenverbinder (5), der mit jeweils einem Ende in die Lüftungsrohrteile (1, 2) eingreift, wobei der Innenverbinder (5), Mittel (6, 17) für einen Längenausgleich in Längsrichtung der beiden Lüftungsrohrteile (1, 2) aufweist, **dadurch gekennzeichnet, dass** die Mittel (6, 17) für den Längenausgleich als federelastische Lappen (6) ausgebildet sind, die gestanzte Blechteile sind, die an der Aussenseite des Innenverbinders (5) angeordnet sind und die am Umfang des rohrförmig ausgebildeten Innenverbinders nach aussen in einen Zwischenraum (15) zwischen den stirnseitigen Flächen (3, 4) der beiden Lüftungsrohrteile (1, 2) eingreifen und federelastisch gespannt an der einen stirnseitigen Fläche (3) des einen Lüftungsrohrteiles (1) anliegen.

2. Verbindung nach Anspruch 1, **dadurch gekennzeichnet, dass** der Innenverbinder (5) an seinem Umfang nach aussen ragende Dichtungsrillen (10) aufweist, die jeweils an einer Innenseite (18, 19) der Lüftungsrohrteile (1, 2) anliegen.

3. Verbindung nach einem der Ansprüche 1 bis 3, **dadurch gekennzeichnet, dass** ein Aussenverbinder (11) zum kraftschlüssigen Verbinden der beiden Lüftungsrohrteile (1, 2) vorgesehen ist.

4. Innenverbinder für eine Verbindung nach Anspruch 1, der rohrförmig ausgebildet ist und zwei Enden (8, 9) aufweist, die jeweils in ein Lüftungsrohrteil (1, 2) einzusetzen sind und Mittel (6, 17) für einen Längenausgleich in Längsrichtung der beiden Lüftungsrohrteile (1, 2) aufweist, **dadurch gekennzeichnet, dass** die Mittel (6, 17) für den Längenausgleich als federelastische Lappen (6) ausgebildet sind, die gestanzte Blechteile sind, die an der Aussenseite des Innenverbinders (5) angeordnet sind und die nach aussen ragen und dass er an seinem Umfang nach aussen ragende Dichtungsrillen (10) aufweist, die jeweils an einer Innenseite (18, 19) der Lüftungsrohrteile (1, 2) anzulegen sind.

## Claims

1. Connection comprising two ventilation pipe parts (1, 2), which lie one opposite the other at a butt joint with end-face surfaces (3, 4) and are made of a non-combustible and, preferably, mineral material, comprising an internal connector (5) of tubular configuration, which with each end respectively engages in the ventilation pipe parts (1, 2), the internal connector (5) having means (6, 17) for a longitudinal equalization in the longitudinal direction of the two ventilation pipe parts (1, 2), **characterized in that** the means (6, 17) for the longitudinal equalization are configured as resiliently elastic lugs (6), which are stamped sheet-metal parts which are disposed on the outer side of the internal connector (5) and which, on the periphery of the tubular internal connector, engage outwards in an interspace (15) between the end-face surfaces (3, 4) of the two ventilation pipe parts (1, 2) and, under resiliently elastic tension, bear against one end-face surface (3) of one ventilation pipe part (1).

2. Connection according to Claim 1, **characterized in that** the internal connector (5) has on its periphery outward-jutting packing grooves (10), which respectively bear against an inner side (18, 19) of the ventilation pipe parts (1, 2).

3. Connection according to Claim 1 or 2, **characterized in that** an external connector (11) is provided for the non-positive connection of the two ventilation pipe parts (1, 2).

4. Internal connector for a connection according to Claim 1, which is of tubular configuration and has two ends (8, 9), which are respectively to be inserted in a ventilation pipe part (1, 2), and means (6, 17) for a longitudinal equalization in the longitudinal direction of the two ventilation pipe parts (1, 2), **characterized in that** the means (6, 17) for the longitudinal equalization are configured as resiliently elastic lugs (6), which are stamped sheet-metal parts which are disposed on the outer side of the internal connector (5) and which jut outwards, and **in that** the internal connector has on its periphery outward-jutting packing grooves (10), which are respectively to be applied on an inner side (18, 19) of the ventilation pipe parts (1, 2).

## Revendications

1. Connexion entre deux éléments de tuyauterie de ventilation (1, 2) qui se font face par leurs faces frontales (3, 4) au niveau d'un point d'aboutement et qui sont fabriqués en un matériau non combustible et de préférence minéral, comprenant un raccord interne (5) de forme tubulaire qui s'engage avec une extrémité respective dans les éléments de tuyauterie de ventilation (1, 2), le raccord interne (5) présentant des moyens (6, 17) de compensation en longueur dans la direction longitudinale des deux éléments de tuyauterie de ventilation (1, 2), **caractérisée en ce que** les moyens (6, 17) de compensation en longueur sont réalisés sous forme de pattes élastiques à ressort (6) qui sont des pièces de tôle estampées, qui sont disposées du côté extérieur du raccord interne (5) et qui s'engagent au niveau de la périphérie du raccord interne tubulaire vers l'extérieur dans un espace intermédiaire (15) entre les faces frontales (3, 4) des deux éléments de tuyauterie de ventilation (1, 2) et qui s'appliquent par contrainte élastique à ressort contre l'une des faces frontales (3) d'un des éléments de tuyauterie de ventilation (1).

2. Connexion selon la revendication 1, **caractérisée en ce que** le raccord interne (5) présente sur sa périphérie des gorges d'étanchéité saillant vers l'extérieur (10), qui s'appliquent respectivement contre un côté interne (18, 19) des éléments de tuyauterie de ventilation (1, 2).

3. Connexion selon la revendication 1 ou 2, **caractérisée en ce qu'**un raccord externe (11) est prévu pour la connexion par engagement par force des deux éléments de tuyauterie de ventilation (1, 2) .

4. Raccord interne pour une connexion selon la revendication 1, qui est réalisé avec une forme tubulaire et qui présente deux extrémités (8, 9), qui doivent être chacune insérées dans un élément de tuyauterie de ventilation (1, 2) et qui présente des moyens (6, 17) pour une compensation en longueur dans la direction longitudinale des deux éléments de tuyauterie de ventilation (1, 2), **caractérisé en ce que** les moyens (6, 17) pour la compensation en longueur sont réalisés sous forme de pattes élastiques à ressort (6) qui sont des pièces de tôle estampées qui sont disposées du côté extérieur du raccord interne (5) et qui font saillie vers l'extérieur et **en ce qu'**il présente sur sa périphérie des gorges d'étanchéité saillant vers l'extérieur (10), qui doivent être appliquées chacune contre un côté intérieur (18, 19) des éléments de tuyauterie de ventilation (1, 2).
